# EUROPEAN PATENT APPLICATION

(11) **EP 3 936 916 A1**
(43) Date of publication of application: **12.01.2022**
(21) Application number: 20795994.1
(22) Date of filing: 18.04.2020
(51) Int. Cl.: G02B 7/09, G03B 17/02, G03B 11/00, G03B 13/36

(54) **AUTO-FOCUS DRIVING ASSEMBLY, LENS AND ELECTRONIC DEVICE**

(30) Priority: 26.04.2019 CN 201910343262
(71) Applicant: Huawei Technologies Co., Ltd., Shenzhen, Guangdong 518129 (CN)
(72) Inventor: WU, Chengshiun, Shenzhen, Guangdong 518129 (CN)
(74) Representative: Körber, Martin Hans
(86) International application number: PCT/CN2020/085472
(87) International publication number: WO 2020/216153

(57) **Abstract**

This application provides an auto-focus driving assembly, where the auto-focus driving assembly is used in an electronic device (100) including a lens kit and a sensor, a light ray incident to the lens kit passes through the auto-focus driving assembly and enters the sensor (242), and the auto-focus driving assembly includes: a driving motor, configured to drive the lens kit to move; a housing (530), configured to accommodate the driving motor; and a first light-shielding body (554), disposed on an inner wall of the housing (530) and configured to prevent light irradiated on the first light-shielding body (554) from being reflected into a cavity of the housing (530). The first light-shielding body (554) is disposed on the inner wall of the housing (530). When light is irradiated on the first light-shielding body (554), the first light-shielding body (554) can play a flare reduction function, eliminate, for example, a shower flare or a pillar flare, and reserve a margin for processing precision of the lens kit.

## Description

This application claims priority to Chinese Patent Application No. 201910343262.0, filed with the China National Intellectual Property Administration on April 26, 2019 and entitled "AUTO-FOCUS DRIVING ASSEMBLY, LENS KIT, AND ELECTRONIC DEVICE", which is incorporated herein by reference in its entirety.

### TECHNICAL FIELD

This application relates to the imaging field, and more specifically, to an auto-focus driving assembly, a lens kit, and an electronic device.

### BACKGROUND

To meet people's photographing needs, suppliers design and manufacture a variety of lens kits. Because of different design structures, lens kits are used in different photographing scenarios. For example, a short-focus lens kit is usually used for a close-up shot, and a long-focus lens kit is usually used for a long shot. For people to use lens kits conveniently, suppliers tend to design a type of compact lens kit, so as to reduce a lens kit size without compromising lens kit performance. However, for a long-focus lens kit and another lens kit with a complex structure, reducing a lens kit size tends to introduce new problems. For example, it is more difficult for a lens kit with a complex structure to predict an optical path inside the lens kit. For another example, higher complexity of a lens kit indicates a higher processing precision requirement on parts inside the lens kit. If processing precision of the lens kit does not meet the requirement, undesirable imaging effects such as a flare and ghost are prone to occur in a photographed image.

### SUMMARY

This application provides an auto-focus driving assembly, a lens kit, and an electronic device to avoid an undesirable imaging effect on a photographed image.

According to a first aspect, an auto-focus driving assembly is provided. The auto-focus driving assembly is used in an electronic device including a lens kit and a sensor, a light ray incident to the lens kit passes through the auto-focus driving assembly and enters the sensor, and the auto-focus driving assembly includes: a driving motor, configured to drive the lens kit to move; a housing, configured to accommodate the driving motor; and a first light-shielding body, disposed on an inner wall of the housing and configured to prevent light irradiated on the first light-shielding body from being reflected into a cavity of the housing.

The light-shielding sheet usually has a black color and can absorb a light ray, in other words, reduce a reflectivity of the light ray. By using a structure and shape of the light-shielding body, the light ray can be scattered, to be specific, the light ray can deviate from an original propagation direction in an irradiation position with a large surface curvature, and can spread dispersedly. This reduces the reflectivity of the light ray. A size of the light-shielding body has relatively large impact on light scattering. For example, a smaller thickness of the light-shielding sheet indicates easier light ray scattering and a lower reflectivity of a light ray.

The light-shielding body is disposed on the inner wall of the housing. When a light ray is irradiated on the light-shielding body, the light-shielding body can play a flare reduction function to prevent the light ray irradiated on the light-shielding body from being reflected into the cavity of the housing. In addition, the light-shielding sheet disposed on the inner wall of the housing can eliminate, for example, a shower flare or a pillar flare. Because the lens kit and the auto-focus driving assembly are two assemblable components, if processing precision of the lens kit does not meet a requirement or the lens kit is improperly designed, a flare is prone to occur. Therefore, the light-shielding body disposed in the auto-focus driving assembly may be used for a remedy, to avoid repair processing on the lens kit and reserve a margin for the processing precision of the lens kit.

With reference to the first aspect, in some implementations of the first aspect, a position in which the first light-shielding body is disposed on the housing is outside a movement range of the lens kit relative to the housing.

The light-shielding body is disposed in a position with no contact with a barrel, so as to prevent motion interference and avoid damage to an element.

With reference to the first aspect, in some implementations of the first aspect, the first light-shielding body is a light-shielding ring, the inner wall of the housing is provided with an internal thread, an outer periphery of the first light-shielding body is provided with an external thread, and the first light-shielding body is threadedly connected to the inner wall of the housing.

The light-shielding sheet is threadedly connected to the inner wall of the housing, so that a relative position of the light-shielding sheet on the inner wall of the housing can be adjusted in a process of assembling the light-shielding sheet.

With reference to the first aspect, in some implementations of the first aspect, an inner periphery of the first light-shielding body is configured to prevent the light irradiated on the first light-shielding body from being reflected into the cavity of the housing; and the inner periphery of the first light-shielding body is provided with one or more bevels.

A smaller thickness of the light-shielding sheet indicates a better light-shielding effect. A surface of the light-shielding sheet has a part of its material cut away, so as to form the bevel and reduce a local thickness of the light-shielding sheet. This further improves a flare reduction effect of the light-shielding sheet.

With reference to the first aspect, in some implementations of the first aspect, the first light-shielding body is disposed in a groove on the inner wall of the housing.

This application provides a manner of disposing the light-shielding body, so that the light-shielding body may be built in the inner wall of the housing, and the light-shielding body can be stably mounted.

With reference to the first aspect, in some implementations of the first aspect, the auto-focus driving assembly further includes one or more gaskets, disposed in the groove on the inner wall of the housing and being in contact with the first light-shielding body.

The relative position of the light-shielding body on the inner wall of the housing can be adjusted by adjusting a mounting sequence of the gasket and the light-shielding body.

With reference to the first aspect, in some implementations of the first aspect, the first light-shielding body is a light-shielding ring, an outer periphery of the first light-shielding body is disposed in the groove on the inner wall of the housing, and an inner periphery of the first light-shielding body is configured to prevent the light irradiated on the first light-shielding body from being reflected into the cavity of the housing; and the inner periphery of the first light-shielding body is provided with one or more bevels.

A smaller thickness of the light-shielding sheet indicates a better light-shielding effect. A surface of the light-shielding sheet has a part of its material cut away, so as to form the bevel and reduce a local thickness of the light-shielding sheet. This further improves a flare reduction effect of the light-shielding sheet.

With reference to the first aspect, in some implementations of the first aspect, the first light-shielding body is a light-shielding sheet, a light-shielding cloth, light-shielding adhesive, a light-shielding ring, or an uneven surface structure being capable of light shielding.

This surface structure capable of light shielding is sometimes called a coarse surface.

In one aspect, the uneven surface structure may have a black color, so that the uneven surface structure may be configured to absorb a light ray. In another aspect, because the uneven surface structure features unevenness, a light ray irradiated on this special surface structure is easily scattered. Therefore, the light ray can be further prevented from continuing to propagate in the cavity of the housing.

With reference to the first aspect, in some implementations of the first aspect, the lens kit further includes a barrel and a lens disposed in the barrel; and the lens kit further includes a second light-shielding body, disposed on an inner wall of the barrel or in a groove of the lens, and configured to prevent light irradiated on the second light-shielding body from being reflected into a cavity of the barrel.

A light-shielding sheet disposed on the lens or a light-shielding sheet disposed in a region on the inner wall of the barrel that is close to the lens can eliminate, for example, a circular flare or a pillar flare. A light-shielding sheet disposed in a region away from the lens and close to the auto-focus driving assembly can eliminate, for example, a shower flare or a pillar flare.

With reference to the first aspect, in some implementations of the first aspect, the lens kit is a periscope lens kit or a long-focus lens kit.

According to a second aspect, a lens kit is provided. The lens kit is used in an electronic device including an auto-focus driving assembly and a sensor, a light ray incident to the lens kit passes through the auto-focus driving assembly and enters the sensor, and the lens kit includes: a lens; a barrel, configured to accommodate the lens; and a second light-shielding body, disposed on an inner wall of the barrel, having a distance to the auto-focus driving assembly that is less than a threshold, and configured to prevent light irradiated on the second light-shielding body from being reflected into a cavity of the barrel.

The light-shielding sheet usually has a black color and can absorb a light ray, in other words, reduce a reflectivity of the light ray. By using a structure and shape of the light-shielding body, the light ray can be scattered, to be specific, the light ray can deviate from an original propagation direction in an irradiation position with a large surface curvature, and can spread dispersedly. This reduces the reflectivity of the light ray. A size of the light-shielding body has relatively large impact on light scattering. For example, a smaller thickness of the light-shielding sheet indicates easier light ray scattering and a lower reflectivity of a light ray.

The light-shielding body is disposed in a region away from the lens and close to the auto-focus driving assembly. This region may also be considered as a region with no lens disposed. When a light ray is irradiated on the light-shielding body, the light-shielding body can play a flare reduction function to prevent the light ray irradiated on the light-shielding body from continuing to propagate in the cavity of the barrel. A light-shielding sheet disposed in a region away from the lens and close to the auto-focus driving assembly can eliminate, for example, a shower flare or a pillar flare.

With reference to the second aspect, in some implementations of the second aspect, the second light-shielding body is a light-shielding ring, the inner wall of the barrel is provided with an internal thread, an outer periphery of the second light-shielding body is provided with an external thread, and the second light-shielding body is threadedly connected to the inner wall of the barrel.

The light-shielding sheet is threadedly connected to the inner wall of the barrel, so that a relative position of the light-shielding sheet on the inner wall of the barrel can be adjusted in a process of assembling the light-shielding sheet.

With reference to the second aspect, in some implementations of the second aspect, an inner periphery of the second light-shielding body is configured to prevent the light irradiated on the second light-shielding body from being reflected into the cavity of the housing; and the inner periphery of the second light-shielding body is provided with one or more bevels.

A smaller thickness of the light-shielding sheet indicates a better light-shielding effect. A surface of the light-shielding sheet has a part of its material cut away, so as to form the bevel and reduce a local thickness of the light-shielding sheet. This further improves a flare reduction effect of the light-shielding sheet.

With reference to the second aspect, in some implementations of the second aspect, the second light-shielding body is disposed in a groove on the inner wall of the barrel.

This application provides a manner of disposing the light-shielding body, so that the light-shielding body may be built in the inner wall of the barrel, and the light-shielding body can be stably mounted.

With reference to the second aspect, in some implementations of the second aspect, the lens kit further includes one or more gaskets, disposed in the groove on the inner wall of the barrel and being in contact with the second light-shielding body.

The relative position of the light-shielding body on the inner wall of the barrel can be adjusted by adjusting a mounting sequence of the gasket and the light-shielding body.

With reference to the second aspect, in some implementations of the second aspect, the second light-shielding body is a light-shielding ring, an outer periphery of the second light-shielding body is disposed in the groove on the inner wall of the barrel, and an inner periphery of the second light-shielding body is configured to prevent the light irradiated on the second light-shielding body from being reflected into the cavity of the housing; and the inner periphery of the second light-shielding body is provided with one or more bevels.

A smaller thickness of the light-shielding sheet indicates a better light-shielding effect. A surface of the light-shielding sheet has a part of its material cut away, so as to form the bevel and reduce a local thickness of the light-shielding sheet. This further improves a flare reduction effect of the light-shielding sheet.

With reference to the second aspect, in some implementations of the second aspect, the second light-shielding body is a light-shielding sheet, a light-shielding cloth, light-shielding adhesive, a light-shielding ring, or an uneven surface structure being capable of light shielding.

This surface structure capable of light shielding is sometimes called a coarse surface.

In one aspect, the uneven surface structure may have a black color, so that the uneven surface structure may be configured to absorb a light ray. In another aspect, because the uneven surface structure features unevenness, a light ray irradiated on this special surface structure is easily scattered. Therefore, the light ray can be further prevented from continuing to propagate in the cavity of the barrel.

With reference to the second aspect, in some implementations of the second aspect, the auto-focus driving assembly includes: a driving motor, configured to drive the lens kit to move; a housing, configured to accommodate the driving motor; and a first light-shielding body, disposed on an inner wall of the housing and configured to prevent light irradiated on the first light-shielding body from being reflected into a cavity of the housing.

The light-shielding body is disposed on the inner wall of the housing. When a light ray is irradiated on the light-shielding body, the light-shielding body can play a flare reduction function to prevent the light ray irradiated on the light-shielding body from being reflected into the cavity of the housing. In addition, the light-shielding sheet disposed on the inner wall of the housing can eliminate, for example, a shower flare or a pillar flare. Because the lens kit and the auto-focus driving assembly are two assemblable components, if processing precision of the lens kit does not meet a requirement or the lens kit is improperly designed, a flare is prone to occur. Therefore, the light-shielding body disposed in the auto-focus driving assembly may be used for a remedy, to avoid repair processing on the lens kit and reserve a margin for the processing precision of the lens kit.

With reference to the second aspect, in some implementations of the second aspect, the lens kit is a periscope lens kit or a long-focus lens kit.

According to a third aspect, a lens kit module is provided, including a lens kit and the auto-focus driving assembly according to any one of the first aspect or the possible implementations of the first aspect.

According to a fourth aspect, a lens kit module is provided, including the lens kit according to any one of the second aspect or the possible implementations of the second aspect and an auto-focus driving assembly.

According to a fifth aspect, a camera compact module is provided, including a lens kit, an image sensor, and the auto-focus driving assembly according to any one of the first aspect or the possible implementations of the first aspect.

According to a sixth aspect, a camera compact module is provided, including the lens kit according to any one of the second aspect or the possible implementations of the second aspect, an image sensor, and an auto-focus driving assembly.

According to a seventh aspect, an electronic device is provided, including the auto-focus driving assembly according to any one of the first aspect or the possible implementations of the first aspect.

According to an eighth aspect, an electronic device is provided, including the lens kit according to any one of the second aspect or the possible implementations of the second aspect

According to a ninth aspect, an electronic device is provided, including the lens kit module according to the third aspect or the fourth aspect.

According to a tenth aspect, an electronic device is provided, including the camera compact module according to the fifth aspect or the sixth aspect.

### BRIEF DESCRIPTION OF DRAWINGS

FIG. 1 is a schematic diagram of a structure of an electronic device;
FIG. 2 is a schematic diagram of a structure of a camera compact module;
FIG. 3 is a schematic diagram of a structure of a long-focus lens kit;
FIG. 4 is a schematic diagram of a structure of a lens kit module according to an embodiment of this application;
FIG. 5 is a schematic diagram of a structure of a light-shielding body according to an embodiment of this application;
FIG. 6 is a schematic diagram of a structure of a light-shielding body according to an embodiment of this application;
FIG. 7 is a schematic diagram of a structure of a light-shielding body according to an embodiment of this application;
FIG. 8 is a schematic diagram of a structure of a light-shielding body according to an embodiment of this application;
FIG. 9 is a schematic diagram of a structure of a light-shielding body according to an embodiment of this application;
FIG. 10 is a schematic diagram of a structure of mounting a light-shielding body according to an embodiment of this application;
FIG. 11 is a schematic diagram of a structure of mounting a light-shielding body according to an embodiment of this application;
FIG. 12 is a schematic diagram of a structure of mounting a light-shielding body according to an embodiment of this application;
FIG. 13 is a schematic diagram of a structure of a light-shielding body according to an embodiment of this application;
FIG. 14 is a schematic diagram of a structure of a light-shielding body according to an embodiment of this application;
FIG. 15 is a schematic diagram of a structure of a light-shielding body according to an embodiment of this application; and
FIG. 16 is a schematic diagram of a structure of a periscope camera compact module according to an embodiment of this application.

### DESCRIPTION OF EMBODIMENTS

The following describes technical solutions of this application with reference to accompanying drawings.

For ease of understanding this application, the following first briefly describes several concepts in this application.

### 1. Auto-focus:

For a lens kit whose lens has a fixed relative position relationship, focusing may be understood as implementing changes of an object distance and an image distance to achieve a conjugate relationship, so that an image is clear. This can be achieved by an auto-focus driving assembly inside a mobile phone by driving this lens kit group to move. In other words, in an auto-focusing process, a focal length of an imaging lens kit may remain unchanged, and auto-focusing is implemented only by changing an object distance and an image distance.

### 2. Optical image stabilization:

In an optical image stabilization technology, when a gyroscope in a camera compact module detects a slight motion, a signal is transmitted to an image chip to calculate a displacement amount that needs to be compensated for, and then a lens kit group is driven to perform compensation based on the calculated displacement amount, so as to overcome image blur caused by a camera shake.

### 3. Field of view (field of view, FOV):

In an optical instrument, with a lens kit of the optical instrument as a vertex, an included angle formed by two edges of a maximum range in which an objective image of a detected object can pass through the lens kit is called a field of view. A size of the field of view determines a vision range of the optical instrument. A larger field of view indicates greater vision.

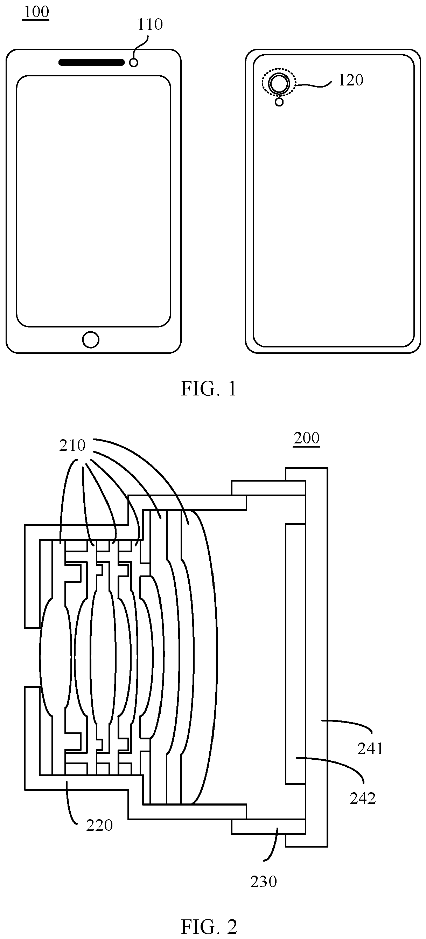

FIG. 1 is a schematic diagram of an electronic device. As shown in FIG. 1, a camera compact module 110 and/or a camera compact module 120 are mounted in an electronic device 100.

The electronic device 100 may be an electronic device having a video shooting or photographing function, for example, a mobile phone, a smartphone, a tablet computer, a laptop computer, a video camera, a video recorder, a camera, or a device in another form having the photographing or video shooting function. For ease of understanding, the embodiments of this application are described by using an example in which the electronic device 100 is a mobile phone.

The electronic device 100 includes a housing and a display assembly. The housing includes a bezel and a rear cover, and the bezel surrounds an edge of the rear cover. The display assembly is disposed on a side of the bezel that is away from the rear cover. Generally, a user faces the display assembly to observe an image displayed on the display assembly. Therefore, a surface of the display assembly that faces the user may be a front face of the electronic device 100. Accordingly, an exposed face of the rear cover may be a rear face of the electronic device 100.

A camera compact module (camera compact module, CCM) may be disposed on each of the front face and the rear face of the electronic device 100. Alternatively, the camera compact module may be disposed only on the front face of the electronic device 100 or on the rear face of the electronic device 100. As shown in FIG. 1, a left diagram is the front face of the mobile phone, and the camera compact module 110 is mounted on an upper portion of the front face; and a right diagram in FIG. 1 is the rear face of the mobile phone, and the camera compact module 120 is mounted on an upper left portion of the rear face. The camera compact module may alternatively be disposed in another position. For example, the camera compact module may be built in the electronic device 100. When photographing is needed, the camera compact module is ejected from the electronic device 100 under assistance of an ejecting structure in the electronic device 100. It should be understood that, the mounting positions of the camera compact module 110 and the camera compact module 120 are merely examples, and a mounting position of the camera compact module is not limited in this application.

It should be further understood that, quantities of the mounted camera compact modules 110 and the mounted camera compact modules 120 each is not limited to one, and may be two or above. For example, two camera compact modules 120 may be mounted on the rear face of the electronic device 100. A quantity of mounted camera compact modules is not limited in this embodiment of this application.

The electronic device 100 may further include a processing module, configured to convert an optical signal obtained by the camera compact module into a digital image. For example, the processing module may include an analog-to-digital converter and an image processor such as a digital signal processor (digital signal processing, DSP). The analog-to-digital converter may be configured to convert an analog image signal into a digital image signal The image processor may be configured to process digital image information to form a compressed image signal.

It should be understood that, other elements such as an earpiece and a key may be disposed on the electronic device 100 shown in FIG. 1. In this embodiment of this application, an electronic device with a camera compact module mounted is merely used as an example. However, an element mounted on the electronic device 100 is not limited thereto.

FIG. 2 is a schematic diagram of a camera compact module 200. The camera compact module 200 may be the camera compact module 110 or the camera compact module 120 shown in FIG. 1.

The camera compact module 200 may include a lens kit, an auto-focus driving assembly, and an image sensor (sensor) 242. The camera compact module 200 may be fixed to a mounting base 241 inside the electronic device 100. The lens kit may be a prime lens kit or a zoom lens kit. The lens kit may alternatively be a short-focus lens kit, a long-focus lens kit, a periscope lens kit, or the like.

The lens kit may include a barrel 220 and one or more lenses (lens) 210 disposed inside the barrel 220. One end of the barrel 220 is assembled with the auto-focus driving assembly, and the other end of the barrel 220 is provided with a light inlet, so as to control a field of view of the lens kit. The lens 210 may be a plastic (plastic) lens or a glass (glass) lens. The lens 210 may be a spherical lens or an aspheric lens.

The auto-focus driving assembly includes a housing 230, which may be assembled with the barrel 220, and is configured to perform auto-focusing or optical image stabilization on the lens kit. The auto-focus driving assembly may further include, for example, a driving integrated circuit (not shown in FIG. 2) disposed inside the housing 230. The auto-focus driving assembly may also be referred to as a motor. A method for implementing auto-focusing or optical image stabilization by using the auto-focus driving assembly may be similar to that in the current technology. To avoid repetition, description thereof is omitted herein.

The image sensor 242 may be a semiconductor chip. A surface of the image sensor 242 is provided with hundreds of thousands to millions of photodiodes. When exposed to light, the photodiodes generate charges, so as to convert an optical signal into an electrical signal. For example, the image sensor 242 may be a charge coupled device (charge coupled device, CCD) or a complementary metal-oxide semiconductor (complementary metal-oxide semiconductor, CMOS). As shown in FIG. 2, the image sensor 242 is fixed to the mounting base 241 of the camera compact module 200. The image sensor 242 may alternatively be fixed to another component. A mounting position of the image sensor 242 is not limited in this application.

The camera compact module 200 may further include, for example, an infrared cut-off filter, elements (not shown in the figure) such as a circuit board, and a gyroscope. For example, the infrared cut-off filter may eliminate an unnecessary light ray cast onto the image sensor 242 to prevent the image sensor 242 from generating false colors or ripples. This improves an effective resolution and color reproduction performance of the image sensor 242. The circuit board may be a flexible printed circuit (flexible printed circuit, FPC) or a printed circuit board (printed circuit board, PCB), and is configured to transmit an electrical signal.

A working principle of the camera compact module 200 may be as follows: A light ray reflected by a photographed subject passes through the one or more lenses 210 and the auto-focus driving assembly in the lens kit, and is cast onto the surface of the image sensor 242. Based on an optical lens imaging principle, the auto-focus driving assembly may be used to drive the barrel 220, so that the lens 210 inside the barrel 220 is moved to a suitable position to obtain a clear and distortion-free image. In this way, light rays can be focused on the image sensor 242 to form a clear optical image. The image sensor 242 can convert the optical image into an electrical signal to obtain an image signal.

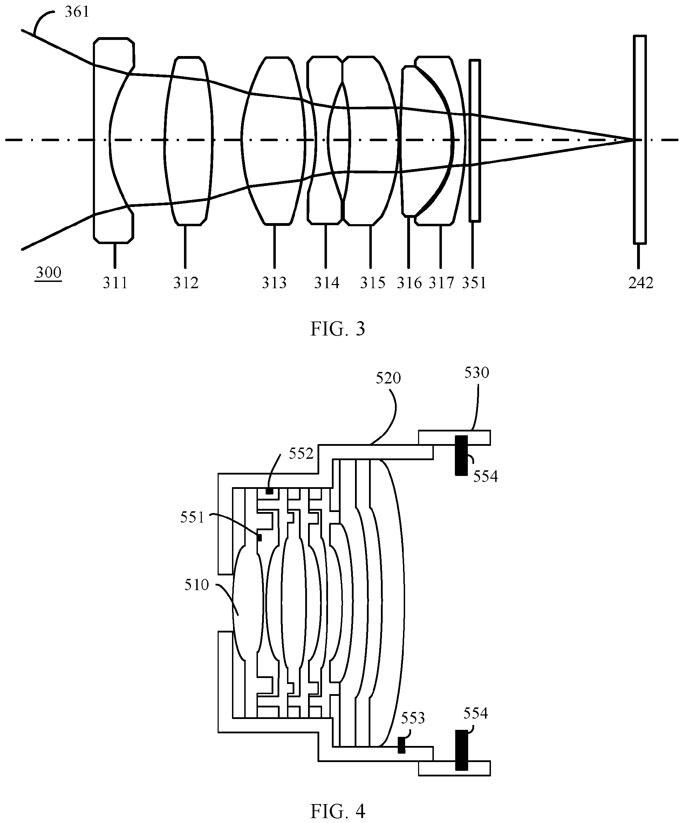

FIG. 3 is a schematic diagram of a structure of a lens group disposed inside a long-focus lens kit 300. The long-focus lens kit 300 includes lenses 311 to 317 and a light filter 251. A light ray from the outside passes through the lenses 311 to 317 and the light filter 251 successively, and is irradiated on the sensor 242. The light ray is refracted at the same time when it enters and exits the lenses 311 to 317 or the light filter. A field of view 361 of the long-focus lens kit 300 shown in FIG. 3 is a predicted field of view. When shapes and sizes of the lenses 311 to 317 and the light filter 351 are definite, and a relative position relationship between the lenses 311 to 317, the light filter 351, and the image sensor 242 is also definite, a situation in which a signal propagates within the long-focus lens kit 300 is predictable. For example, a propagation direction of the light ray inside the lens kit may be predicted, refraction occurring in each lens, a corresponding refractive index, and the like may be predicted, and an image formed on the image sensor 242 by projecting an object in a scene around the lens kit to the image sensor 242 may be predicted. However, since the long-focus lens kit 300 is a complex lens kit and has a large number of internal elements, prediction of optical signal propagation has a relatively large error. In addition, if processing precision of the lens kit does not meet a requirement, for example, a lens is obliquely mounted, a distance between lenses does not meet a tolerance requirement, a surface roughness of a lens does not meet a requirement, or a lens thickness does not meet a tolerance requirement, unpredictable deflection of the light propagation direction is likely to occur, causing a flare to a photographed image. Therefore, a technical solution for preventing a flare from forming on a photographed image is needed.

FIG. 4 is a schematic diagram of a structure of a lens kit module according to an embodiment of this application. A lens kit module 500 in this embodiment of this application may be the camera compact module 110 or the camera compact module 120 shown in FIG. 1, or may be a part of the camera compact module 110 or the camera compact module 120. For example, the lens kit module 500 may be mounted on the mounting base 241 in the electronic device 100 shown in FIG. 1, and the mounting base 241 is provided with an image sensor 242.

It should be understood that, inside some mobile phones, a lens, an auto-focus driving assembly, and an image sensor in a camera compact module form a whole through assembly, and the whole may be referred to as a camera compact module. However, in some cases, a lens kit and an auto-focus driving assembly form a whole, and the whole is referred to as a lens kit module in this embodiment of this application. For example, in a digital camera, a lens kit and an auto-focus driving assembly are assembled into a whole, and the whole is detachably mounted on a body of the digital camera, while an image sensor is mounted inside the body of the digital camera. Therefore, for clearer description, in this embodiment of this application, the camera compact module may include an image sensor, but the lens kit module may not include an image sensor. In some cases, for example, in a mobile phone, a whole formed by assembling a lens kit module and an image sensor may be a camera compact module. In other words, in some cases, a lens kit module may be considered as a part of a camera compact module.

The lens kit module 500 is formed by assembling a lens kit and an auto-focus driving assembly. For example, in a mobile phone, the lens kit module 500 may be mounted on the mounting base 241 in the mobile phone, and assembled with the image sensor 242 in the mobile phone to form a camera compact module, as shown in FIG. 2. For another example, in a digital camera, the lens kit module 500 may be mounted on a mounting base that is configured to mount a lens kit module.

The lens kit includes a barrel 520 and one or more lenses (lenses 510 shown in FIG. 4) disposed inside the barrel 520. The lens kit may be a prime lens kit or a zoom lens kit. The lens kit may alternatively be a short-focus lens kit, a long-focus lens kit, a periscope lens kit, or the like. One end of the barrel 520 is assembled with the auto-focus driving assembly. The lens 510 may be a plastic (plastic) lens or a glass (glass) lens. The lens 510 may be a spherical lens or an aspheric lens.

The auto-focus driving assembly is configured to perform auto-focusing or optical image stabilization on the lens kit. The auto-focus driving assembly includes a housing 530. A first part of the housing 530 may be assembled with the barrel 520. A second part of the housing 530 may be mounted on the mounting base 241 of the electronic device 100, and the second part is away from the lens kit and close to the image sensor 242. The auto-focus driving assembly may further include, for example, a driving integrated circuit (not shown in FIG. 4) disposed inside the housing 530. The auto-focus driving assembly may also be referred to as a motor. A method for performing auto-focusing or optical image stabilization by using the auto-focus driving assembly may be similar to that in the current technology. To avoid repetition, description thereof is omitted herein.

A light-shielding body is disposed on the lens, an inner wall of the barrel, and/or an inner wall of the housing of the auto-focus driving assembly (the inner wall of the housing for short below). The light-shielding body is configured to prevent light irradiated on the light-shielding body from being reflected into a cavity of the housing 530 of the auto-focus driving assembly. There may be one or more light-shielding sheets.

For ease of understanding this application, the following briefly describes a flare reduction principle of a light-shielding sheet.

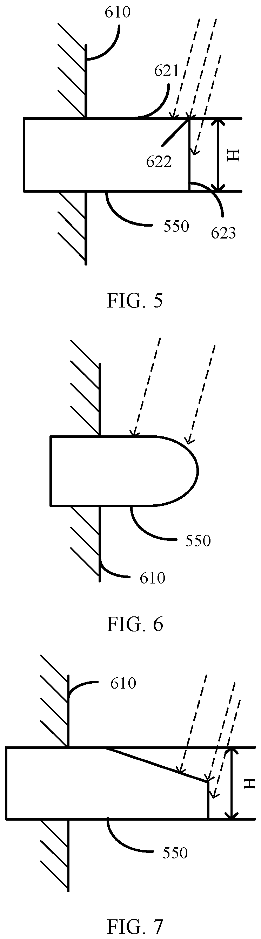

The light-shielding sheet usually has a black color and can absorb a light ray, in other words, reduce a reflectivity of the light ray. By using a structure and shape of the light-shielding body, the light ray can be scattered, to be specific, the light ray can deviate from an original propagation direction in an irradiation position with a large surface curvature, and can spread dispersedly. This reduces the reflectivity of the light ray. A size of the light-shielding body has relatively large impact on light scattering. For example, a smaller thickness H (as shown in FIG. 5) of the light-shielding sheet indicates easier light ray scattering and a lower reflectivity of a light ray.

As shown in FIG. 4, a light-shielding body 551 is disposed on the lens 510. For example, the light-shielding body 551 is attached to a surface of the lens 510. When a light ray is irradiated on the light-shielding body 551, the light-shielding body 551 can play a flare reduction to prevent the light ray irradiated on the light-shielding body 551 from being reflected into the barrel 520 and continuing to propagate in a cavity of the barrel 520.

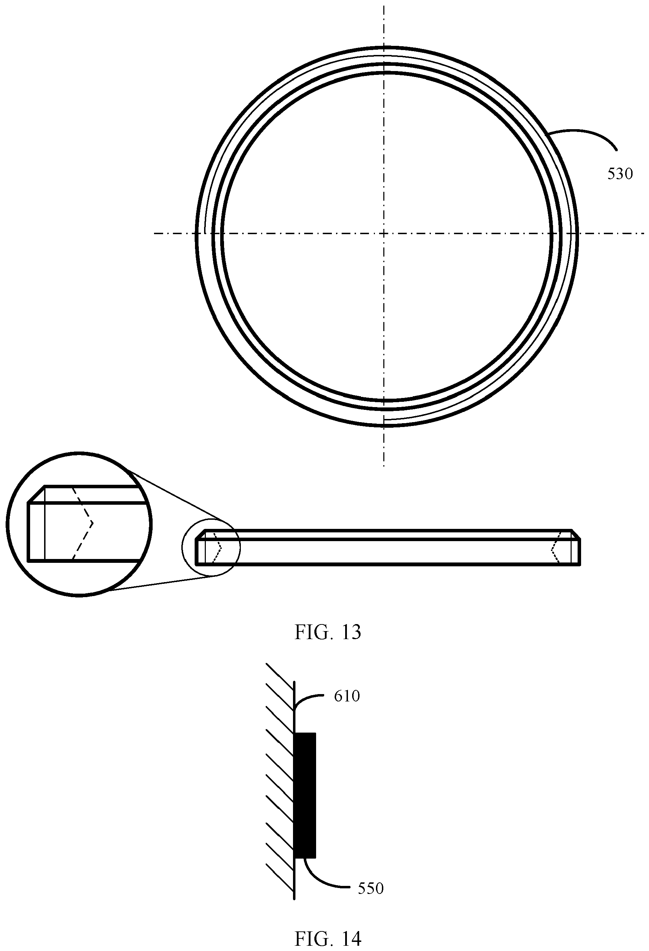

As shown in FIG. 4, a light-shielding body 552 is disposed on the inner wall of the barrel. Particularly, the light-shielding body 552 is disposed around the lens 510, for example, the light-shielding body 552 is disposed between two lenses. For example, the light-shielding body 552 is a light-shielding patch (referring to FIG. 14) that may be attached to the inner wall of the barrel. When a light ray is irradiated on the light-shielding body 552, the light-shielding body 552 can play a flare reduction to prevent the light ray irradiated on the light-shielding body 552 from continuing to propagate in the cavity of the barrel 520.

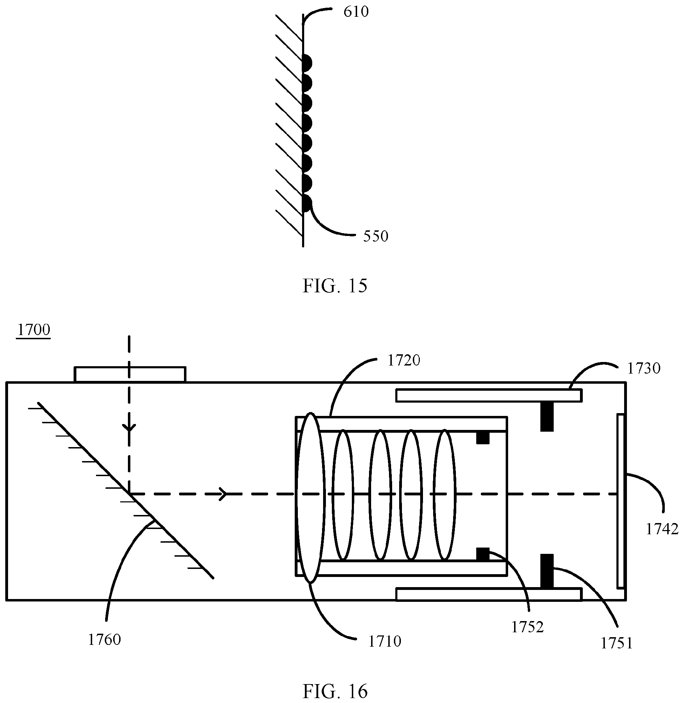

As shown in FIG. 4, a light-shielding body 553 is disposed on the inner wall of the barrel. Particularly, the light-shielding body 553 is disposed in a region away from the lens 510 and close to the auto-focus driving assembly. In other words, a distance between a position of the light-shielding body 553 on the inner wall of the barrel and the auto-focus driving assembly is less than a threshold. The threshold may be set based on an actual situation. This region may also be considered as a region with no lens disposed. For example, a surface structure capable of light absorption (referring to FIG. 15) is disposed in a region on the inner wall of the barrel that is close to the auto-focus driving assembly. The surface structure is the light-shielding body 553. That is, the light-shielding body 553 is integrated with the inner wall of the barrel. When a light ray is irradiated on the light-shielding body 553, the light-shielding body 553 can play a flare reduction to prevent the light ray irradiated on the light-shielding body 553 from continuing to propagate in the cavity of the barrel 520.

As shown in FIG. 4, a light-shielding body 554 is disposed on the inner wall of the housing. For example, a groove is dug in the inner wall of the housing, and the light-shielding body 554 capable of flare reduction is placed in the groove. When a light ray is irradiated on the light-shielding body 554, the light-shielding body 554 can play a flare reduction to prevent the light ray irradiated on the light-shielding body 554 from being reflected into the cavity of the housing 530.

Further, experiment and simulation results show that, the light-shielding sheet 551 disposed on the lens 510 or the light-shielding sheet 552 disposed in the region on the inner wall of the barrel that is close to the lens 510 can eliminate, for example, a circular flare or a pillar flare. The light-shielding sheet 553 disposed in the region away from the lens 510 and close to the auto-focus driving assembly and the light-shielding sheet 554 disposed on the inner wall of the housing can eliminate, for example, a shower flare or a pillar flare.

Further, because the lens kit and the auto-focus driving assembly are two assemblable components, if processing precision of the lens kit does not meet a requirement or the lens kit is improperly designed, a flare is prone to occur. Therefore, the light-shielding body disposed in the auto-focus driving assembly may be used for a remedy, to avoid repair processing on the lens kit and reserve a margin for the processing precision of the lens kit.

FIG. 5 to FIG. 15 are schematic diagrams of structures of a light-shielding body 550 according to embodiments of this application. The light-shielding body 550 may be any one of the light-shielding bodies 551 to 554 shown in FIG. 4. It can be understood that, the embodiments shown in FIG. 5 to FIG. 15 are merely intended to help a person skilled in the art better understand the technical solutions of this application, but are not intended to limit the technical solutions of this application. Many improvements and other embodiments of this application will be figured out by a person skilled in the art owing to the guidance presented in the foregoing description and related drawings. Therefore, it should be understood that, this application is not limited to the particular embodiments disclosed.

FIG. 5 to FIG. 15 show cross-sectional shapes of the light-shielding body 550 when the light-shielding body 550 is disposed on the lens, the inner wall of the barrel, or the inner wall of the housing. The following uses an inner wall 610 of the housing as an example for description. It should be understood that, the light-shielding body 550 may alternatively be mounted in a position other than the inner wall 610 of the housing.

The light-shielding body 550 shown in FIG. 5 is a light-shielding sheet. As shown in FIG. 5, a groove may be disposed in the inner wall 610 of the housing, and is configured to place the light-shielding sheet 550. It should be understood that, a quantity of light-shielding sheets 550 placed in the groove may be one or above, that is, one or more light-shielding sheets may be placed in one groove. After a light ray is irradiated on an inner peripheral surface of the light-shielding sheet 550, the light-shielding sheet 550 can reduce a reflectivity of the light to prevent the light ray from continuing to propagate in the cavity of the housing 530. In one aspect, the light-shielding sheet has a black color, so that the light-shielding sheet may be configured to absorb the light ray. In another aspect, a structure of the light-shielding sheet can further prevent the light ray from continuing to propagate in the cavity of the housing 530. For example, when the light ray is irradiated on an upper surface 621 of the light-shielding sheet 550, the light ray is reflected and may continue to propagate towards the lens 510, or even be emitted out of the barrel 520. Therefore, the light ray is not irradiated on the image sensor 242. For another example, when the light ray is irradiated on a cross position 622 between the upper surface 621 and a side surface 623 of the light-shielding sheet 550 or is irradiated on the side surface 623, because the light-shielding sheet 550 has a very small thickness, a surface of the cross position and the side surface 623 may have a relatively large curvature, and the light ray may be scattered in the cross position. This reduces a reflectivity of the light ray. The thickness H of the light-shielding sheet 550 may be, for example, 0.012 mm, 0.016 mm, 0.021 mm, or 0.03 mm. A smaller thickness H of the light-shielding sheet 550 indicates a better light-shielding effect. It should be understood that, because the thickness of the light-shielding sheet is very small, a profile curve of the side surface 623 that is actually obtained through processing may be a straight line (as shown in FIG. 5) or a curve (as shown in FIG. 6). FIG. 7 to FIG. 14 are described by using an example in which the profile curve of the side surface 623 of the light-shielding sheet 550 is a straight line or a broken line formed by a plurality of straight lines. It should be understood that, the profile curve of the side surface 623 of the light-shielding sheet 550 may alternatively be a curve.

Reducing the overall thickness H of the light-shielding sheet is sometimes infeasible in further improving a flare reduction effect of the light-shielding sheet. Instead, the flare reduction effect of the light-shielding sheet can be improved by locally thinning the light-shielding sheet. FIG. 7 to FIG. 9 are schematic diagrams of locally thinning the light-shielding sheet.

As shown in FIG. 7, the upper surface 621 of the light-shielding sheet 550 may have a part of its material cut away, so as to reduce a thickness of the side surface 623 of the light-shielding sheet 550 and form a bevel. This improves the flare reduction effect of the light-shielding sheet.

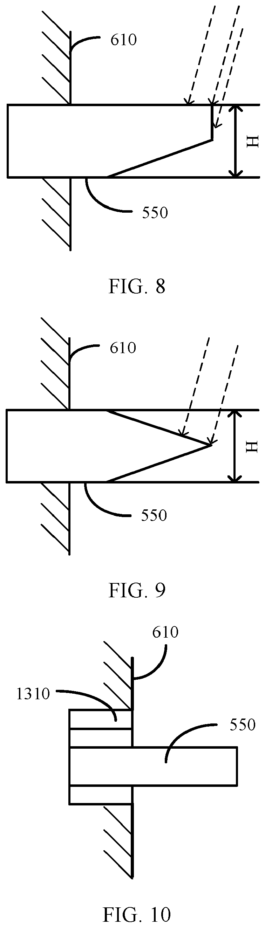

As shown in FIG. 8, a lower surface of the light-shielding sheet 550 may have a part of its material cut away, so as to reduce a thickness of the side surface 623 of the light-shielding sheet 550 and form a bevel. This improves the flare reduction effect of the light-shielding sheet.

As shown in FIG. 9, the upper surface 621 and a lower surface of the light-shielding sheet 550 each may have a part of its material cut away, so as to form two bevels and even a sharp corner, which greatly reduces a thickness of the side surface 623 of the light-shielding sheet 550. This significantly improves the flare reduction effect of the light-shielding sheet 550.

Optionally, a simulation or experiment may be used to determine how to dispose the light-shielding sheet, for example, determine a shape and a size of the light-shielding body and a position for disposing the light-shielding body.

The light-shielding sheet shown in FIG. 5 to FIG. 10 may be a polyhedron of any shape. The following uses an annular light-shielding sheet as an example to describe how to dispose the light-shielding sheet. The light-shielding sheet shown in FIG. 5 to FIG. 10 may have another shape other than the annular shape. A manner of determining a size of the light-shielding sheet of another shape is similar to a manner of determining a size of the annular light-shielding sheet. Details are not described herein again.

The light-shielding sheet 550 shown in FIG. 5 to FIG. 10 may be an annular light-shielding sheet (also referred to as a light-shielding ring), and an inner diameter thereof is related to a position requiring flare reduction. In an example of the light-shielding sheet 550 shown in FIG. 5, the flare reduction effect is better in the cross position 622 between the upper surface 621 and the side surface 623 of the light-shielding sheet 550 and on the side surface 623 of the light-shielding sheet 550. Moreover, the side surface 623 of the light-shielding sheet 550 can further limit the light propagation direction. Therefore, the inner diameter of the light-shielding sheet 550 may be determined based on the position requiring flare reduction. The position requiring flare reduction may be obtained in a simulation or experiment manner.

In addition to the manners of disposing the light-shielding sheet shown in FIG. 5 to FIG. 10, there are also manners of disposing the light-shielding sheet shown in FIG. 10 to FIG. 13. FIG. 10 to FIG. 13 show cross-sectional shapes of the light-shielding sheet 550 when the light-shielding sheet 550 is disposed on the lens, the inner wall of the barrel, or the inner wall of the housing. The following uses the inner wall 610 of the housing as an example for description. It should be understood that, the light-shielding sheet may alternatively be mounted in a position other than the inner wall 610 of the housing.

As shown in FIG. 10, a groove may be disposed in the inner wall 610 of the housing, and is configured to place the light-shielding sheet 550 and a gasket 1310. The gasket 1310 is in contact with the light-shielding sheet 550. A relative position of the light-shielding body on the inner wall 610 of the housing can be adjusted by adjusting a mounting sequence of the gasket 1310 and the light-shielding body. For example, as shown in FIG. 10, three gaskets 1310 and one light-shielding sheet 550 are disposed in the groove in the inner wall 610 of the housing, where two gaskets 1310 are disposed above the light-shielding sheet 550, and one gasket 1310 is disposed below the light-shielding sheet 550. It can be learned that, the gaskets 1310 and the light-shielding sheet 550 are disposed in the groove shown in FIG. 10, so that the light-shielding sheet 550 may be disposed in any one of four positions in the groove. The relative position of the light-shielding sheet 550 in the groove can be adjusted by adjusting the gaskets 1310 above the light-shielding sheet 550 to below the light-shielding sheet 550.

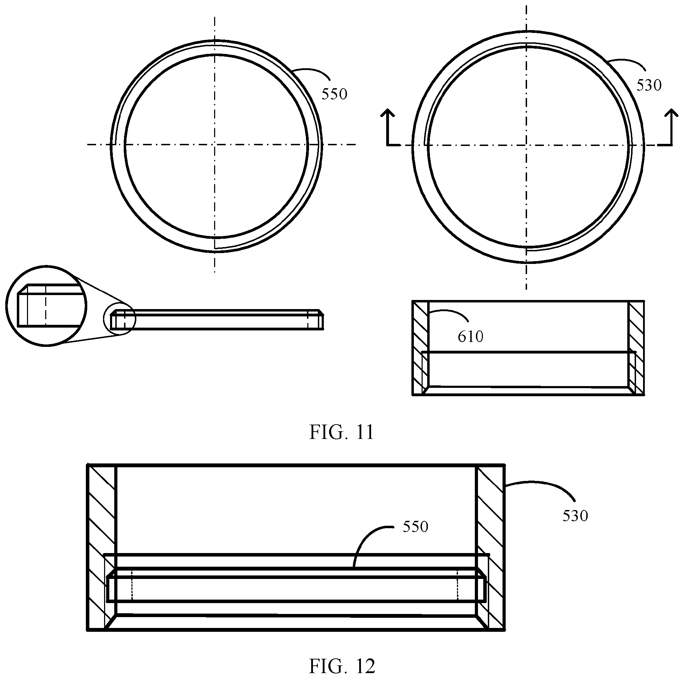

As shown in FIG. 11, the inner wall 610 of the housing may be provided with an internal thread, and an outer periphery of the light-shielding sheet 550 may be provided with an external thread. FIG. 12 is a schematic diagram of screwing the light-shielding sheet 550 into the cavity of the housing 530. By forming a threaded fit between the light-shielding sheet 550 and the inner wall 610 of the housing, the light-shielding sheet 550 is threadedly connected to the inner wall 610 of the housing, so that the relative position of the light-shielding sheet on the inner wall 610 of the housing can be adjusted in a process of assembling the light-shielding sheet 550.

An inner annular surface of the light-shielding sheet 550 shown in FIG. 11 is a cylindrical surface. The inner annular surface of the light-shielding sheet 550 may alternatively be another flat surface or curved surface. An inner annular surface of the light-shielding sheet 550 shown in FIG. 13 may be a three-dimensional curved surface formed by superimposing two side surfaces of a frustum of a cone. Compared with a cylindrical surface, this three-dimensional curved surface can further improve the flare reduction effect of the light-shielding sheet 550.

Particularly, in a process of auto-focusing or optical image stabilization, relative positions of the lens kit and the auto-focus driving assembly may change. Therefore, to ensure normal operation (that is, to avoid a flare occurring in the image sensor 242) of the lens kit module in a plurality of scenarios, in one aspect, the light-shielding sheet should be disposed in a position capable of avoiding impact by another element, for example, the light-shielding sheet 550 on the inner wall of the housing should be away from the lens kit and close to the image sensor 242; and in another aspect, the light-shielding sheets may be disposed in a plurality of positions of the lens, the inner wall of the barrel, and/or the inner wall of the housing.

The light-shielding body 550 shown in FIG. 14 is a light-shielding patch. As shown in FIG. 14, the light-shielding patch may be directly attached to the inner wall 610 of the housing. Because the light-shielding patch has a light absorbing function, attaching the light-shielding patch onto the inner wall 610 of the housing can prevent the light ray from being reflected into the cavity of the housing 530. This avoids occurrence of a flare. The light-shielding patch may be a black material. Particularly, a surface of the light-shielding patch may form a special flare reduction surface structure, which can further improve the flare reduction effect.

As shown in FIG. 15, the light-shielding body 550 attached to the inner wall 610 of the housing is a surface structure capable of light shielding. Such a surface structure may be integrated with the housing 530. For example, the surface structure may be a coating having a special surface. For another example, the surface structure may be a special surface appearance formed on the inner wall 610 of the housing through embossing. It should be understood that, the surface structure may be further formed on the inner wall 610 of the housing in another manner, which is not limited in this application.

A surface structure capable of light shielding usually features unevenness, and this surface structure capable of light shielding is sometimes called a coarse surface. For example, fine particles are attached to a smooth surface to form an uneven or rough surface. For example, fine particles may be attached through magnetron sputtering, electroplating, or the like. For another example, fine dents are obtained on a smooth surface through embossing to form an uneven or rough surface. In one aspect, the special surface structure may have a black color, so that the special surface structure may be configured to absorb a light ray. In another aspect, because the special surface structure features unevenness, a light ray irradiated on this special surface structure is easily scattered. Therefore, the light ray can be further prevented from continuing to propagate in the cavity of the housing 530.

The light-shielding bodies shown in FIG. 14 and FIG. 15 may be distributed on the entire inner wall 610 of the housing. A simulation or experiment manner may be used to determine how to dispose the light-shielding bodies, for example, positions for disposing the light-shielding bodies.

For example, to prevent occurrence of motion interference, the barrel in a moving state should not touch the light-shielding body on the auto-focus driving assembly. That is, a position in which the light-shielding body is disposed on the housing is outside a movement range of the lens kit relative to the housing.

FIG. 16 is a schematic diagram of a structure of a camera compact module according to an embodiment of this application. In this embodiment of this application, a camera compact module 1700 may be the camera compact module 110 or the camera compact module 120 shown FIG. 1.

The camera compact module 1700 may include a lens kit, an auto-focus driving assembly, and an image sensor 1742. The lens kit shown in FIG. 16 is a periscope lens kit. It should be understood that, the lens kit may be a prime lens kit or a zoom lens kit. The lens kit may alternatively be a short-focus lens kit, a long-focus lens kit, or the like.

The lens kit includes a barrel 1720 and one or more lenses (lenses 1710 shown in FIG. 16) disposed inside the barrel 1720. One end of the barrel 1720 is assembled with the auto-focus driving assembly. The lens 1710 may be a plastic (plastic) lens or a glass (glass) lens. The lens 1710 may be a spherical lens or an aspheric lens.

The auto-focus driving assembly includes a housing 1730. The housing 1730 is assembled with the barrel 1720, and is configured to perform auto-focusing or optical image stabilization on the lens kit. The auto-focus driving assembly may further include, for example, a driving integrated circuit (not shown in FIG. 16) disposed inside the housing 1730. The auto-focus driving assembly may also be referred to as a motor. A method for performing auto-focusing or optical image stabilization by using the auto-focus driving assembly may be similar to that in the current technology. To avoid repetition, description thereof is omitted herein.

Light-shielding bodies are disposed on the lens, an inner wall of the barrel, and an inner wall of the housing of the auto-focus driving assembly (the inner wall of the housing for short below). The light-shielding body is configured to prevent light irradiated on the light-shielding body from being reflected into a cavity of the housing 1730 of the auto-focus driving assembly. There may be one or more light-shielding bodies.

As shown in FIG. 16, a light-shielding body 1751 is disposed on the inner wall of the housing. A type, shape, size, and disposing position of the light-shielding body 1751 may be set with reference to FIG. 5 to FIG. 15. When a light ray is irradiated on the light-shielding body 1751, the light-shielding body 1751 can play a flare reduction function to prevent the light ray irradiated on the light-shielding body 1751 from being reflected into the cavity of the housing 1730.

As shown in FIG. 16, a light-shielding body 1752 is disposed on the inner wall of the barrel. Particularly, the light-shielding body 1752 is disposed in a region away from the lens 1710 and close to the auto-focus driving assembly. This region may also be considered as a region with no lens disposed. A type, shape, size, and disposing position of the light-shielding body 1752 may be set with reference to FIG. 5 to FIG. 15. When a light ray is irradiated on the light-shielding body 1752, the light-shielding body 1752 can play a flare reduction to prevent the light ray irradiated on the light-shielding body 1752 from continuing to propagate in the cavity of the barrel 1720.

Further, because the lens kit and the auto-focus driving assembly are two assemblable components, if processing precision of the lens kit does not meet a requirement or the lens kit is improperly designed, a flare is prone to occur. Therefore, the light-shielding body disposed in the auto-focus driving assembly may be used for a remedy, to avoid repair processing on the lens kit and reserve a margin for the processing precision of the lens kit.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of this application. The foregoing storage medium includes: any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An auto-focus driving assembly, wherein the auto-focus driving assembly is used in an electronic device comprising a lens kit and a sensor, a light ray incident to the lens kit passes through the auto-focus driving assembly and enters the sensor, and the auto-focus driving assembly comprises:
a driving motor, configured to drive the lens kit to move;
a housing, configured to accommodate the driving motor; and
a first light-shielding body, disposed on an inner wall of the housing and configured to prevent light irradiated on the first light-shielding body from being reflected into a cavity of the housing.

2. The auto-focus driving assembly according to claim 1, wherein a position in which the first light-shielding body is disposed on the housing is outside a movement range of the lens kit relative to the housing.

3. The auto-focus driving assembly according to claim 1 or 2, wherein the first light-shielding body is a light-shielding ring, the inner wall of the housing is provided with an internal thread, an outer periphery of the first light-shielding body is provided with an external thread, and the first light-shielding body is threadedly connected to the inner wall of the housing.

4. The auto-focus driving assembly according to claim 3, wherein an inner periphery of the first light-shielding body is configured to prevent the light irradiated on the first light-shielding body from being reflected into the cavity of the housing; and the inner periphery of the first light-shielding body is provided with one or more bevels.

5. The auto-focus driving assembly according to claim 1 or 2, wherein the first light-shielding body is disposed in a groove on the inner wall of the housing.

6. The auto-focus driving assembly according to claim 5, wherein the auto-focus driving assembly further comprises:
one or more gaskets, disposed in the groove on the inner wall of the housing and being in contact with the first light-shielding body.

7. The auto-focus driving assembly according to claim 5 or 6, wherein the first light-shielding body is a light-shielding ring, an outer periphery of the first light-shielding body is disposed in the groove on the inner wall of the housing, and an inner periphery of the first light-shielding body is configured to prevent the light irradiated on the first light-shielding body from being reflected into the cavity of the housing; and the inner periphery of the first light-shielding body is provided with one or more bevels.

8. The auto-focus driving assembly according to claim 1 or 2, wherein the first light-shielding body is a light-shielding sheet, a light-shielding cloth, light-shielding adhesive, a light-shielding ring, or an uneven surface structure being capable of light shielding.

9. The auto-focus driving assembly according to any one of claims 1 to 8, wherein the lens kit comprises a barrel and a lens disposed in the barrel; and the lens kit further comprises:
a second light-shielding body, disposed on an inner wall of the barrel or in a groove of the lens, and configured to prevent light irradiated on the second light-shielding body from being reflected into a cavity of the barrel.

10. The auto-focus driving assembly according to any one of claims 1 to 9, wherein the lens kit is a periscope lens kit or a long-focus lens kit.

11. A lens kit, wherein the lens kit is used in an electronic device comprising an auto-focus driving assembly and a sensor, a light ray incident to the lens kit passes through the auto-focus driving assembly and enters the sensor, and the lens kit comprises:
a lens;
a barrel, configured to accommodate the lens; and
a second light-shielding body, disposed on an inner wall of the barrel, having a distance to the auto-focus driving assembly that is less than a threshold, and configured to prevent light irradiated on the second light-shielding body from being reflected into a cavity of the barrel.

12. The lens kit according to claim 11, wherein the second light-shielding body is a light-shielding ring, the inner wall of the barrel is provided with an internal thread, an outer periphery of the second light-shielding body is provided with an external thread, and the second light-shielding body is threadedly connected to the inner wall of the barrel.

13. The lens kit according to claim 12, wherein an inner periphery of the second light-shielding body is configured to prevent the light irradiated on the second light-shielding body from being reflected into the cavity of the barrel; and the inner periphery of the second light-shielding body is provided with one or more bevels.

14. The lens kit according to claim 11, wherein the second light-shielding body is disposed in a groove on the inner wall of the barrel.

15. The lens kit according to claim 14, wherein the lens kit further comprises:
one or more gaskets, disposed in the groove on the inner wall of the barrel and being in contact with the second light-shielding body.

16. The lens kit according to claim 14 or 15, wherein the second light-shielding body is a light-shielding ring, an outer periphery of the second light-shielding body is disposed in the groove on the inner wall of the barrel, and an inner periphery of the second light-shielding body is configured to prevent the light irradiated on the second light-shielding body from being reflected into the cavity of the housing; and the inner periphery of the second light-shielding body is provided with one or more bevels.

17. The lens kit according to claim 11, wherein the second light-shielding body is a light-shielding sheet, a light-shielding cloth, light-shielding adhesive, a light-shielding ring, or an uneven surface structure being capable of light shielding.

18. The lens kit according to any one of claims 11 to 17, wherein the auto-focus driving assembly comprises:
a driving motor, configured to drive the lens kit to move;
a housing, configured to accommodate the driving motor; and
a first light-shielding body, disposed on an inner wall of the housing and configured to prevent light irradiated on the first light-shielding body from being reflected into a cavity of the housing.

19. The lens kit according to any one of claims 11 to 18, wherein the lens kit is a periscope lens kit or a long-focus lens kit.

20. A lens kit module, comprising a lens kit and the auto-focus driving assembly according to any one of claims 1 to 10.

21. A lens kit module, comprising the lens kit according to any one of claims 11 to 19 and an auto-focus driving assembly.

22. A camera compact module, comprising a lens kit, an image sensor, and the auto-focus driving assembly according to any one of claims 1 to 10.

23. A camera compact module, comprising the lens kit according to any one of claims 11 to 19, an image sensor, and an auto-focus driving assembly.

24. An electronic device, comprising the auto-focus driving assembly according to any one of claims 1 to 10.

25. An electronic device, comprising the lens kit according to any one of claims 11 to 19.

26. An electronic device, comprising the lens kit module according to claim 20 or 21.

27. An electronic device, comprising the camera compact module according to claim 22 or 23.
